Europäisches Patentamt

European Patent Office

Office européen des brevets

(19)

(11) Publication number: **0 389 031**
**A1**

# EUROPEAN PATENT APPLICATION

(12)

(21) Application number: **90200568.5**

(22) Date of filing: **12.03.90**

(51) Int. Cl.⁵: **H04N 9/12, G02F 1/133**

(30) Priority: **16.03.89 NL 8900637**

(43) Date of publication of application:
**26.09.90 Bulletin 90/39**

(84) Designated Contracting States:
**CH DE FR GB IT LI NL SE**

(71) Applicant: **N.V. Philips' Gloeilampenfabrieken**
**Groenewoudseweg 1**
**NL-5621 BA Eindhoven(NL)**

(72) Inventor: **Blommaert, Franciscus Johannes**
**Josephus**
**c/o INT. OCTROOIBUREAU B.V. Prof.**
**Holstlaan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

(54) **Colour display device.**

(57) A higher picture quality for picture display on, for example, liquid crystal TV is perceptively obtained by a suitable choice of the arrangement and surface ratio of the red, green and blue picture cells.

| B | R | G | B | R |
|---|---|---|---|---|
| G | | B | R | G |
| B | R | G | B | R |
| G | | B | R | G |
| B | R | G | B | R |

**FIG.4**

EP 0 389 031 A1

## Colour display device.

The invention relates to a colour display device having a pattern of row electrodes or scanning electrodes and a pattern of column electrodes or data electrodes which cross one another, while picture cells associated with the colours red, green and blue are formed at the location of the crossings in an electro-optical medium, said picture cells being driven by means of active switching elements via the row and column electrodes.

Such a display device is described, for example, in NL-A-8601063 (PHN 11 .740). In this device the resolving power is improved by each time combining three picture cells each displaying one of the colours red, green and blue to a triangular pixel, the so-called "delta structure".

The Article "Colour Pixel Arrangement evaluation for LC-TV" 1985 Int. Display Res. Conf. pp. 24-25 compares the different arrangements of picture cells. In this Article the said "delta structure" is described as being the best, based on a subjective quality assessment.

A problem in the said display device, realised or not realised with the "delta structure", is the occurrence of artefacts, for example, the line structure which is produced when picture cells of the same luminance, but of a luminance different from that of the other cells, are arranged in a given direction. The visibility of such artefacts is greatest if the picture (or a part of it) is monochrome green. A structure which is then generated, for example, a line structure also remains visible in the white picture due to the differences in intensity of the three composite colours. The visibility is also dependent on the average quantity of light, the mutual distance and the size of the picture cells and their mutual arrangement. For monochrome blue or red pictures the effect is smaller because the luminance is lower and hence the visual resolution is smaller (Kulikowski J.J., Some stimulus parameters affecting spatial and temporal resolution of human vision. Vis. Res. 11, 83-93).

A device according to the invention is characterized in that the total surface of a picture cell of a pixel associated with the green colour is substantially equal to the sum of the surfaces of the picture cell associated with the red colour and the picture cell of the pixel associated with the blue colour.

By enlarging the surface of the picture cell for the green colour, the total picture is thereby filled in a more homogeneous way so that the visibility of artefacts in monochrome green decreases.

Also in pictures composed of red, green and blue sub-pictures these artefacts will be less visible because the luminances of the three sub-cells within one pixel are now closer together.

In this respect it is to be noted that the Article mentioned in the opening paragraph states the possibility of composing said pixels in such a way that the surface of two green picture cells is approximately equal to the sum of surfaces of the red and blue picture cells. As compared with the structure proposed in this Article the number of active switching elements (TFTs, MIMs) in a device according to the invention is, however, reduced by 25% because the pixels are each time composed of four sub-cells (one red, one blue, two green). Moreover, this requires additional drive electronics.

A preferred embodiment of a display device according to the invention is characterized in that three picture cells associated with red, green and blue, respectively, constitute a substantially square pixel. Such square pixels are particularly suitable for displaying text (such as, for example, teletext characters).

The invention will now be described in greater detail by way of an embodiment and a drawing in which

Fig. 1 shows diagrammatically a device according to the invention,

Fig. 2 is a diagrammatic plan view of a part of a pattern of picture cells used in a device according to the invention,

Fig. 3 is a diagrammatic cross-section taken on the line III-III in Fig. 2, and

Fig. 4 shows diagrammatically the arrangement of the picture cells.

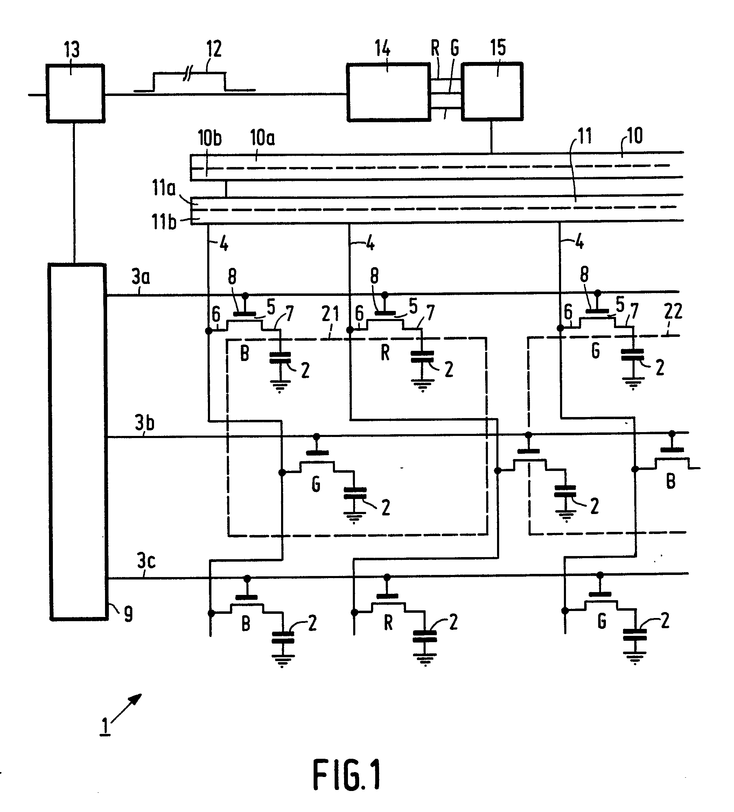

Fig. 1 shows a display device 1 according to the invention. It comprises a plurality of display cells 2, which are shown diagrammatically, at the location of crossings of row or scanning electrodes 3 and column or data electrodes 4. In this embodiment the display cells are driven by MOS transistors 5 whose source zones 6 are connected to the data electrodes 4, whose drain zones 7 are connected to the cells 2 and whose gate electrodes 8 are connected to the row electrodes 3. The row or scanning electrodes 3 are successively energized via a multiplex circuit 9 while the data electrodes 4 are provided with information via analog shift registers 10 and hold circuits 11. The information in the shift registers 10 originates from a video signal 12 of length t which is received, for example, via an input circuit 13 and whose picture information is subsequently sampled by a sampling circuit 14 in such a way that two sub-signals are obtained in this embodiment whose RGB information (red-green-blue) is stored in two registers $10^a$, $10^b$ and hold circuits $11^a$, $11^b$ via a multiplex circuit 15.

The pixels 21 and 22 denoted by means of broken lines are part of a row of pixels constituted by the first two rows of picture cells, i.e. the picture cells driven via the rows $3^a$ and $3^b$.

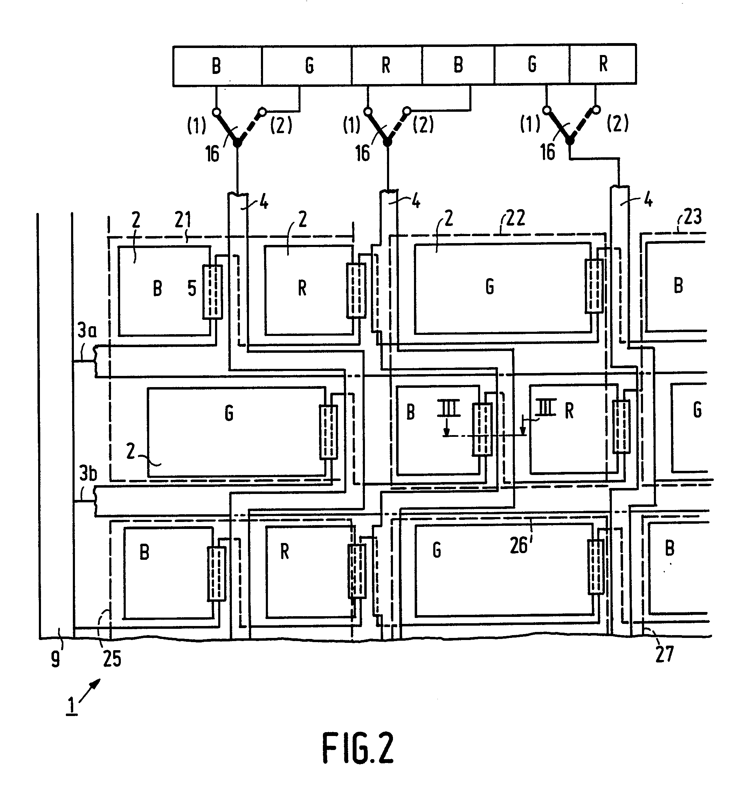

When row electrode $3^a$ is energized during, for example, a period of $\frac{1}{2}$ t, the picture cells R(ed) and B(lue) of pixel 21 are activated, as well as picture cell G(reen) of pixel 22. During the subsequent period of $\frac{1}{2}$ t the row electrode $3^b$ is energized so that the picture cells G(reen) of pixel 21 and R(ed) and B(lue) of pixel 22 are activated. The relevant information is in register $10^a$ and in hold circuit $11^a$ for row $3^a$, in register $10^b$ and in hold circuit $11^b$ for row $3^b$. Since the video signal 12 is divided into 2 sub-signals whose RGB sampling patterns are alternately stored in the registers $10^a$ and $10^b$, the pixels which are distributed across 2 rows of picture cells can be provided with the correct information. As will be shown with reference to Fig. 2, the surface of the picture cells G is chosen to be twice as large as that of the picture cells R, B so that substantially square pixels 21, 22 are obtained.

The transistors 5 are connected to column electrodes 4 via source zones 6, and the colour signal information from the hold circuits 11 is presented via these column electrodes. It is to be noted that the information can still remain present in these hold circuits while the registers 10 are already being provided with new information, for example, because a new video signal 12 is presented.

Fig. 2 further describes the way in which the colours are displayed. The data or column electrodes are connected to the hold circuit 11 via switches 16 which are controlled, for example, from the multiplex circuit 9 in such a way that the switches 16 are in position (1) when the rows $3^a$, $3^c$ etc. are energized and in position (2) when the rows $3^b$, $3^d$ etc. are energized. In this embodiment the hold circuit 11 is diagrammatically shown, while the first 3 signals BGR form part of the first sampling signal, the second 3 signals BGR form part of the second sampling signal, the third 3 signals BGR again form part of the first sampling signal, etc. The two sampling signals thus stored in the circuit 11 and obtained from the video signal of a first picture line are presented as two sub-signals to the column electrodes 4 during periods of $\frac{1}{2}$ t.

During the first period of $\frac{1}{2}$ t row electrode $3^a$ is energized while the switches 16 are in position (1), in other words, the elements B and R of the pixels 21 and 23 are activated while element B of pixel 22 is activated.

During the second period of $\frac{1}{2}$ t row electrode $3^b$ is energized while the switches 16 are in position (2) so that the elements G of the pixels 21 and 23 are activated and the elements B and R of pixel 22 are activated.

After the hold circuit 11 has been provided with a new sampling signal, for example, during a subsequent picture line, row electrode $3^c$ is energized while the switches 16 again assume position (1), in other words, the elements B and R of the pixels 25 and 27 and the element G of pixel 26 are now energized. This process is continued until the last row of picture cells is provided with information.

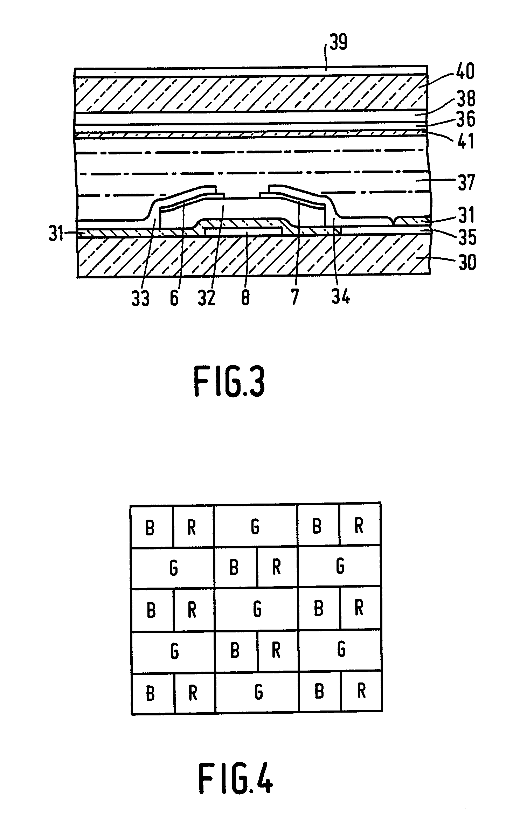

Fig. 3 is a diagrammatic cross-section taken on the line III-III in Fig. 2 in which the MOS transistor 5 is a thin-film transistor (TFT). The transistor has a gate electrode 8 across which a layer of isolating material 31 of, for example, silicon nitride extends which in turn is coated with a layer 32 of semiconductor material such as hydrogen-doped amorphous silicon. The layers 8, 31 and 32 are deposited in a conventional manner on an isolating substrate 30 of, for example, glass and patterned. The semiconductor layer 32 is provided with highly doped parts 6 and 7 of the n-conductivity type in a generally conventional manner, which parts function as source and drain zones and are contacted via connection tracks 33, 34 of, for example, aluminium.

The connection track 33 connects the source zone 6 to a column electrode 4. The connection track 34 connects the drain zone 7 to a transparent electrode 35 of, for example, indium tin oxide which forms part of a picture cell 2. The picture cells 2 comprise a transparent counter-electrode 36 on a second substrate 40, which electrode is connected to, for example, ground potential, while liquid crystal material 37 is present between the electrodes 35 and the said counter-electrode. For colour display the device is also provided with a colour filter 38 having such a pattern (see Fig. 1, 2) that three primary colours coincide with the picture cells. Dependent on the type of liquid crystal and the mode of application, the device may also have one or more polarizers 39. The layer 31 of isolating material and a similar layer 41 provided on the counter-electrode 36 function as orientation layers for orienting the liquid crystal.

Fig. 4 once more diagrammatically shows the arrangement of the picture cells. As described in the opening paragraph, the visibility of artefacts is considerably less with such an arrangement because the luminance of the green picture cells may be lower. This decrease in luminance may be obtained, for example, by correction circuits in the sampling unit or by a lower transmission of the green colour filter elements.

The invention is of course not limited to the embodiments shown, but various modifications are possible within the scope of the invention. For example, the surface ratio of the green, red and blue picture cells need not be exactly 2 : 1 : 1, but may vary. Many variations of the drive mode are also possible such as, for example interlacing. Moreover, the invention is applicable to other electro-optical display devices, for example, electrochromic display devices, electroluminescence display devices, gas discharge display devices, etc.

## Claims

1. A colour display device having a pattern of row electrodes or scanning electrodes and a pattern of column electrodes or data electrodes which cross one another, while picture cells associated with the colours red, green and blue are formed at the location of the crossings in an electro-optical medium, said picture cells being driven by means of active switching elements via the row and column electrodes, characterized in that the total surface of a picture cell of a pixel associated with the green colour is substantially equal to the sum of the surfaces of the picture cell of the pixel associated with the red colour and the picture cell of the pixel associated with the blue colour.

2. A display device as claimed in Claim 1, characterized in that the surfaces of picture cells associated with the red and the blue colour are substantially equal.

3. A display device as claimed in Claim 1 or 2, characterized in that three picture cells associated with red, green and blue, respectively, constitute a substantially square pixel.

4. A display device as claimed in any one of the preceding Claims, characterized in that the electro-optical medium is liquid crystal display material.

FIG.1

**FIG.2**

2 -Ⅲ-PHN 12866

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 133 912  (CITIZEN WATCH) <br> * Page 2, lines 3-21 * <br> --- | 1 | H 04 N    9/12 <br> G 02 F    1/133 |
| A | FR-A-2 534 052  (SEIKO) <br> * Page 20, lines 11-26; figure 22a * <br> --- | 1 | |
| A | PATENT ABSTRACTS OF JAPAN, vol. 8, no. 97 (P-272)[1534], 8th May 1984, page 66 P 272; & JP-A-59 9636 (SUWA SEIKOSHA K.K.) 19-01-1984 <br> ----- | 1 | |

TECHNICAL FIELDS
SEARCHED (Int. Cl.5)

H 04 N
G 02 F

The present search report bas been drawn up for all claims

| Place of search | Date of completion of the search | Examiner |
|---|---|---|
| THE HAGUE | 25-06-1990 | YVONNET J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)